# EUROPEAN PATENT SPECIFICATION

(11) **EP 2 916 017 B1**
(45) Date of publication and mention of the grant of the patent: **28.06.2017**
(21) Application number: 14157916.9
(22) Date of filing: 05.03.2014
(51) Int. Cl.: F16B 21/09, F16B 37/04, B60K 15/077, F16B 5/06, B60K 15/03

(54) **Noise reduction baffle and method for installing same**
Rauschverminderungsmuffe und Verfahren zu ihrer Installation
Déflecteur de réduction de bruit et son procédé d'installation

(43) Date of publication of application: 09.09.2015
(73) Proprietor: Inergy Automotive Systems Research (Société Anonyme), 1120 Bruxelles (BE)
(72) Inventor: Jeongjin, Kim, Suwon (KR); Youngman, Kim, YongIn (KR); Kyuchan, Hwang, Suwon (KR); Bretnacher, Manuel, 60200 Compiègne (FR)
(74) Representative: Remy, Vincent Noel Paul

(56) References cited:
- EP-A1- 1 990 226
- WO-A2-2005/062836
- KR-A- 20100 058 093

## Description

### Field of the Invention

The present invention relates to a noise reduction baffle and to a plastic tank comprising such a baffle, and to a method for installing such a noise reduction baffle in a vehicular fluid tank (for example, a fuel tank or a urea tank).

### Background

Fuel systems on board vehicles of various types generally comprise a tank for storing fuel, and this tank generally comprises at least one internal accessory. One particular case of such accessories is that of noise reduction baffles, the purpose of which is to absorb the noise ("slosh" noise) associated with the waves which may be generated inside the tank when the vehicle accelerates rapidly, brakes, turns, etc. Such baffles are also known as "anti-slosh baffles" in the automotive field.

Generally, these baffles are fixed into the tank after the manufacture of the latter by inserting it through an opening in its wall, for instance the one through which the pumping module is inserted and fixed inside the tank, and which is afterwards closed.

It is a disadvantage of the known noise reduction baffles that a complex, multi-part attachment assembly is necessary to arrange and fix the baffles inside the tank. It is therefore an object of embodiments of the present invention to provide a noise reduction baffle that is easier to attach. Document EP 1 990 226 describes a noise reduction baffle according to the preamble of claim 1.

### Summary of the Invention

According to an aspect of the present invention, there is provided a noise reduction baffle for a vehicular fluid tank, the noise reduction baffle comprising a flange (i.e. protruding portion) and a spring clip mounted on the flange, wherein the spring clip comprises resilient members configured to engage at least one fixing element mountable on the tank and protruding, when mounted, inside the tank and characterized in that the spring clip comprises resilient spacers arranged to push, when mounted, against an inner surface of the tank in order to apply tension to the at least one fixing element.

It is an advantage of the noise reduction baffle according to the present invention that it requires only one separable element, i.e. the single-part spring clip, to install it onto an adequately equipped vehicular fluid tank. The tank only has to be equipped with a protruding fixing element, which will be engagingly received by resilient members of the spring clip. This set-up allows for a very convenient, quick, and secure attachment of the noise reduction baffle to the vehicular fluid tank.

It is another advantage of this noise reduction baffle that it can be adequately immobilized at the point of attachment, and that the fixation can be made stronger thanks to the resilient spacers.

In an embodiment of the noise reduction baffle according to the present invention, the spring clip is substantially made of metal.

It is an advantage of this embodiment that the location of the spring clip, and hence, of the noise reduction baffle, can easily be determined from outside the finished tank by using a metal detector. Prior art baffles required inclusion of a separate metal element, which played no role in the mechanical fastening, purely for detection purposes. This separate, additional element can be omitted in embodiments of the present invention.

In an embodiment of the noise reduction baffle according to the present invention, the spring clip comprises hooks or tabs arranged to counteract removal of the spring clip from the baffle flange.

It is an advantage of this embodiment that the spring clip will not slip off the baffle flange during normal use.

According to an aspect of the present invention, there is provided a vehicular fluid tank having a fixing element protruding therein, the vehicular fluid tank comprising a noise reduction baffle as described above, internally attached thereto by engagement of the at least one fixing element with the spring clip.

In an embodiment of the vehicular fluid tank according to the present invention, the fixing element is an elongate member welded to a wall of the tank.

In an embodiment of the vehicular fluid tank according to the present invention, the fixing element is provided with ridges, tabs, or teeth to facilitate engagement with the resilient members.

According to an aspect of the present invention, there is provided a motor vehicle comprising the vehicular fluid tank as described above as its fuel tank.

According to an aspect of the present invention, there is provided a spring clip for use in the noise reduction baffle as described above, wherein the spring clip comprises resilient members configured to engage at least one fixing element mountable on the tank and protruding, when mounted, inside the tank.

In an embodiment, the spring clip according to the present invention is substantially made of metal.

In an embodiment, the spring clip according to the present invention further comprises resilient spacers arranged to push, when mounted, against an inner surface of the tank in order to apply tension to the at least one fixing element.

In an embodiment, the spring clip according to the present invention further comprises hooks or tabs arranged to counteract removal of the spring clip from the baffle flange.

According to an aspect of the present invention, there is provided a method for installing a noise reduction baffle in a vehicular fluid tank, the noise reduction baffle comprising a flange, the method comprising: mounting at least one fixing element on the tank so as to protrude inside the tank; mounting a spring clip comprising resilient members and resilient spacers arranged to push, when mounted, against an inner surface of the tank in order to apply tension to the at least one fixing element on the flange; and arranging the noise reduction baffle inside the tank, such that the resilient members engage the at least one fixing element. The technical effects and advantages of embodiments of the vehicular fluid tank, the motor vehicle, the spring clip, and the method according to the present invention correspond, *mutatis mutandis,* to those of the corresponding embodiment of the noise reduction baffle according to the present invention.

### Brief description of the figures

These and other aspects and advantages of the present invention will now be described in more detail with reference to the accompanying drawings, in which:
Figure 1 represents a perspective view of a spring clip according to an embodiment of the present invention;
Figure 2 represents a partial perspective view of a noise reduction baffle according to an embodiment of the present invention, prior to mounting the spring clip on the baffle flange (left) and after mounting of the spring clip on the baffle flange (right);
Figure 3 represents partial sectional views of a noise reduction baffle according to an embodiment of the present invention after mounting on a tank along two orthogonal sectional planes; and
Figure 4 provides a flow chart of a method according to an embodiment of the present invention.

Throughout the figures, like reference numbers are used to designate like elements.

### Description of Embodiments

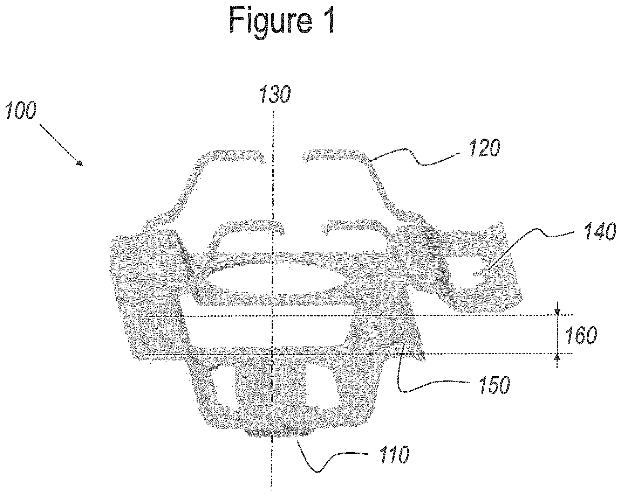

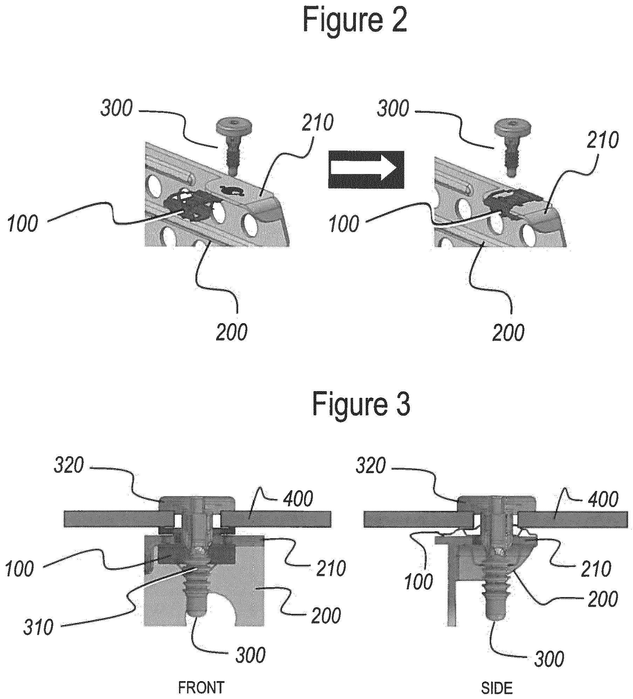

Figure 1 represents a perspective view of a spring clip according to an embodiment of the present invention. The spring clip **100** is intended for use in the noise reduction baffle **200** which will be further described with reference to Figures 2 and 3. The illustrated spring clip **100** comprises resilient members **110** configured to engage a fixing element protruding inside a tank, especially a fuel tank of a vehicle with an internal combustion engine.

The illustrated spring clip **100** is designed to receive a flange in the open space **160,** whereby the spring clip **100** undergoes a certain amount of elastic deformation (increasing the gap **160).** As a result, the spring clip **100** will remain in place due to the static frictional force induced by the pressure of the opposing portions of the spring clip **100** on both sides of the flange.

The illustrated spring clip **100** is designed to receive a fixing element along the axis **130.** As will be explained below with reference to Figures 2 and 3, the upper part of the fixing element will be mounted to a wall of the tank, while the lower part of the fixing element will engage with the resilient members **110.** As is shown, the illustrated spring clip **100** has an opening along the axis **130;** in connection with this embodiment, a corresponding opening will be present in the flange, also aligned with the axis **130.**

Preferably, the spring clip **100** is substantially (i.e., in part, or even completely) made of metal. The use of metal facilitates detection of the position of the spring clip from outside the closed tank, for the purpose of quality control, by means of a metal detector. In addition, the inventors have found that a judiciously chosen metal (such as stainless steel or aluminum) will yield a lightweight spring clip with appropriate resilience.

The illustrated spring clip **100** further comprises optional resilient spacers **120** arranged to push, when mounted, against an inner surface of the tank in order to apply tension to the fixing element. Without loss of generality, these spacers **120** are illustrated as a set of four arms, bent so as to have portion that lies in a common top plane, and dimensioned so as to allow elastic deformation during mounting, thus creating the aforesaid pretension.

The illustrated spring clip **100** further comprises optional hooks **140**, **150**, arranged to counteract removal of the spring clip **100** from a flange on which it is mounted. When the spring clip is made of metal and the baffle flange is made of plastic, the resilience and shape of these hooks **140, 150** will cause them to slightly sink into the surface of the flange, so as to resist any sliding movement away from their intended position. Alternatively, they may be shaped to hook behind a ridge provided on the flange. In a particular embodiment, the surface of the baffle flange is essentially flat.

Further elements of the invention will now be explained with reference to Figures 2 and 3. Figure 2 represents a partial perspective view of a noise reduction baffle according to an embodiment of the present invention, prior to mounting of the spring clip on the baffle flange (left) and after mounting of the spring clip on the baffle flange (right). Figure 3 represents partial sectional views of a noise reduction baffle according to an embodiment of the present invention after mounting on a tank along two orthogonal sectional planes.

A noise reduction baffle **200** is illustrated in Figures 2 and 3. The noise reduction baffle **200** comprises a flange **210** and a spring clip **100** mounted on the flange **210.** Details of the spring clip **100** are as described above. A fixing element **300** cooperates with the spring clip **100** to attach the noise reduction baffle **200** to a wall of a vehicular fluid tank **400** (e.g., a fuel tank of a vehicle with an internal combustion engine).

As can be seen in Figure 2 (left), the spring clip **100** is initially produced as a separate element, preferably made of metal. It is slid onto a flange **210** of the noise reduction baffle **200** to arrive at the noise reduction baffle according to the present invention (right). The elasticity of the spring clip **100,** and optional hooks or tabs (elements **140** and **150** of Figure 1) ensure that the spring clip **100** stays in place after mounting.

As can be seen in Figure 3, the resilient members **110** of the spring clip **100** are configured to engage the fixing element **300,** protrudingly mounted on the tank **400.** The illustrated fixing element **300** is an elongate member, e.g. a rod, which has optional ridges **310** to facilitate the engaging with the resilient members **110** of the spring clip **100.** In the mounted position, the spacing elements (elements **120** in Figure 1) are compressed, such as to exert tension on the fixing element **300,** which strengthens the engagement between the ridges **310** of the fixing element **300** and the resilient members **110** of the spring clip **100.**

The fixing element **300** may have a broadened head section **120,** which may be substantially disc-shaped, and which may facilitate mounting of the fixing element to the wall of the tank **400.** The mounting may take place by welding, gluing, or other appropriate means, taking into account the material of the tank and the material of the fixing element **300.** Alternatively, the fixing element **300** may be of one piece with the wall of the tank **400.**

The present invention also relates to a vehicular fluid tank **400** having a fixing element **300** protruding therein, the vehicular fluid tank **400** comprising a noise reduction baffle **200** as described above, internally attached thereto by engagement of the at least one fixing element **300** with the spring clip **100.** The tank **400** may be a fuel tank. The fixing element **300** may be an elongate member welded or glued to a wall of the tank **400,** or made of one piece with the wall of the tank **400.** Welding is especially efficient if the tank **400** (or at least the relevant surface) is made of plastic, such as HDPE, and the fixing element **300** (or at least the head section) is made of a compatible plastic, such as HDPE. The fixing element **300** is provided with ridges, tabs, or teeth **310** to facilitate engagement with the resilient members **110.**

The present invention also relates to a motor vehicle comprising a vehicular fluid tank **400** as described above as its fuel tank.

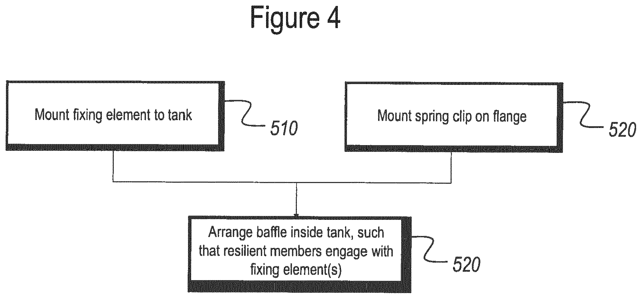

Figure 4 provides a flow chart of a method for installing a noise reduction baffle **200** in a vehicular fluid tank **400,** according to an embodiment of the present invention. The noise reduction baffle **200** comprises a flange **210.** The method comprises mounting **510** at least one fixing element **300** on the tank **400** so as to protrude inside the tank **400.** The method further comprises mounting **520** a spring clip **100** comprising resilient members **110** on said flange **210.** In a final step, the method comprises arranging **530** the noise reduction baffle **200** inside the tank **400,** such that said resilient members **110** engage said at least one fixing element **300.**

It is preferable, but not strictly necessary, to carry out steps **510** and **520** independently from each other. Accordingly, the tank **400** with the protruding fixing element **300** can be prepared in a first place, and the noise reduction baffle **200** with the spring clip **100** can be prepared in a second place, whereby the order of the steps is immaterial. When the prepared noise reduction baffle **200** and the prepared tank **400** are brought together, the baffle **200** can be put in place (e.g., by inserting it through a hole in the tank **400)** and efficiently secured to the inside of the tank **400** by engaging the resilient members **110** of the preassembled clip spring **100** with the fixing element **300.**

In a variant, the fixing element **300** is aligned with the axis of the spring clip (axis **130** in Figure 1) through a hole in the wall of the tank **400,** made to engage with the resilient members **110** of the preassembled clip spring **100,** and only then secured to the tank wall by means of welding or gluing, thereby sealing the hole in the wall of the tank **400.**

While the invention has been described hereinabove with reference to separate system and method embodiments, this was done for clarifying purposes only. The skilled person will appreciate that features described in connection with the system or the method alone, can also be applied to the method or the system, respectively, with the same technical effects and advantages. Furthermore, the scope of the invention is not limited to these embodiments, but is defined by the accompanying claims.

## Claims

1. A noise reduction baffle (200) for a vehicular fluid tank (400), the noise reduction baffle (200) comprising a flange (210) and a spring clip (100) mounted on said flange (210), wherein said spring clip (100) comprises resilient members (110) configured to engage at least one fixing element (300) mountable on the tank (400) and protruding, when mounted, inside the tank (400) and **characterized in that** said spring clip (100) comprises resilient spacers (120) arranged to push, when mounted, against an inner surface of said tank (400) in order to apply tension to said at least one fixing element (300).

2. The noise reduction baffle (200) according to claim 1, wherein said spring clip (100) is substantially made of metal.

3. The noise reduction baffle (200) according to any of the preceding claims, wherein said spring clip (100) comprises hooks or tabs (140, 150) arranged to counteract removal of said spring clip (100) from said flange (210).

4. A vehicular fluid tank (400) having a fixing element (300) protruding therein, the vehicular fluid tank (400) comprising a noise reduction baffle (200) according to any of the preceding claims, internally attached thereto by engagement of said at least one fixing element (300) with said spring clip (100).

5. The vehicular fluid tank (400) according to claim 4, wherein said fixing element (300) is an elongate member welded to a wall of said tank (400).

6. The vehicular fluid tank (400) according to claim 4 or claim 5, wherein said fixing element (300) is provided with ridges, tabs, or teeth (310) to facilitate engagement with said resilient members (110).

7. A motor vehicle comprising the vehicular fluid tank (400) according to any of claims 4-6 as its fuel tank.

8. A spring clip (100) for use in the noise reduction baffle (200) of any of claims 1-3, the spring clip (100) comprising resilient members (110) configured to engage at least one fixing element (300) mountable on the tank (400) and protruding, when mounted, inside the tank (400).

9. The spring clip (100) according to claim 8, substantially made of metal.

10. The spring clip (100) according to claim 8 or claim 9, further comprising resilient spacers (120) arranged to push, when mounted, against an inner surface of said tank (400) in order to apply tension to said at least one fixing element (300).

11. The spring clip (100) according to any of claims 8-10, further comprising hooks or tabs (140, 150) arranged to counteract removal of said spring clip (100) from said flange (210).

12. A method for installing a noise reduction baffle (200) in a vehicular fluid tank (400), the noise reduction baffle (200) comprising a flange (210), the method comprising:
- mounting (510) at least one fixing element (300) on the tank (400) so as to protrude inside the tank (400);
- mounting (520) a spring clip (100) comprising resilient members (110) and resilient spacers (120) arranged to push, when mounted, against an inner surface of said tank (400) in order to apply tension to said at least one fixing element (300), on said flange (210);
- arranging (530) the noise reduction baffle (200) inside the tank (400), such that said resilient members (110) engage said at least one fixing element (300).

## Patentansprüche

1. Eine Schallwand (200) zur Geräuschreduzierung für einen Fahrzeug-Flüssigkeitstank (400), die Schallwand (200) zur Geräuschreduzierung umfassend einen Flansch (210) und eine Federklemme (100), welche an dem genannten Flansch (210) montiert ist, wobei die genannte Federklemme (100) elastische Teile (110) umfasst, welche dazu eingerichtet sind, sich mit wenigstens einem Befestigungselement (300) zu verbinden, welches an dem Tank (400) montierbar ist und innerhalb des Tanks (400) hervorsteht, wenn es montiert ist, und
**dadurch gekennzeichnet,**
**dass** die genannte Federklemme (100) elastische Abstandhalter (120) umfasst, welche derart angeordnet sind, dass sie, wenn sie montiert sind, gegen eine innere Oberfläche des genannten Tanks (400) drücken, um Spannung auf das genannte wenigstens eine Befestigungselement (300) auszuüben.

2. Die Schallwand (200) zur Geräuschreduzierung gemäß Anspruch 1, wobei die genannte Federklemme (100) im Wesentlichen aus Metall hergestellt ist.

3. Die Schallwand (200) zur Geräuschreduzierung gemäß einem beliebigen der vorstehenden Ansprüche, wobei die genannte Federklemme (100) Haken oder Laschen (140, 150) umfasst, welche derart angeordnet sind, dass sie einer Entfernung der genannten Federklemme (100) von dem genannten Flansch (210) entgegenwirken.

4. Ein Fahrzeug-Flüssigkeitstank (400) mit einem Befestigungselement (300) welches innerhalb des Fahrzeug-Flüssigkeitstanks (400) hervorsteht, der Fahrzeug-Flüssigkeitstank (400) umfassend eine Schallwand (200) zur Geräuschreduzierung gemäß einem beliebigen der vorstehenden Ansprüche, wobei die Schallwand (200) intern an dem Tank (400) durch eine Verbindung des genannten wenigstens einen Befestigungselements (300) mit der genannten Federklemme (100) angebracht ist.

5. Der Fahrzeug-Flüssigkeitstank (400) gemäß Anspruch 4, wobei das genannte Befestigungselement (300) ein längliches Teil ist, welches an eine Wand des genannten Tanks (400) geschweißt ist.

6. Der Fahrzeug-Flüssigkeitstank (400) gemäß Anspruch 4 oder Anspruch 5, wobei das genannte Befestigungselement (300) mit Rippen, Laschen oder Zähnen (310) bereitgestellt ist, um eine Verbindung mit dem genannten elastischen Teil (110) zu vereinfachen.

7. Ein Kraftfahrzeug umfassend einen Fahrzeug-Flüssigkeitstank (400) gemäß einem beliebigen der Ansprüche 4 bis 6 als seinen Flüssigkeitstank.

8. Eine Federklemme (100) zur Verwendung in der Schallwand (200) zur Geräuschreduzierung gemäß einem beliebigen der Ansprüche 1 bis 3, die Federklemme (100) umfassend elastische Teile (110), welche dazu eingerichtet sind, sich mit wenigstens einem Befestigungselement (300) zu verbinden, welches an dem Tank (400) montierbar ist und innerhalb des Tanks (400) hervorsteht, wenn es montiert ist.

9. Die Federklemme (100) gemäß Anspruch 8, im Wesentlichen hergestellt aus Metall.

10. Die Federklemme (100) gemäß Anspruch 8 oder Anspruch 9, weiterhin umfassend elastische Abstandhalter (120), welche derart angeordnet sind, dass sie, wenn sie montiert sind, gegen eine innere Oberfläche des genannten Tanks (400) drücken, um Spannung auf das genannte wenigstens eine Befestigungselement (300) auszuüben.

11. Die Federklemme (100) gemäß einem beliebigen der Ansprüche 8 bis 10, weiterhin umfassend Haken oder Laschen (140, 150), welche derart angeordnet sind, dass sie einer Entfernung der genannten Federklemme (100) von dem genannten Flansch (210) entgegenwirken.

12. Ein Verfahren zur Installation einer Schallwand (200) zur Geräuschreduzierung in einem Fahrzeug-Flüssigkeitstank (400), die Schallwand (200) zur Geräuschreduzierung umfassend einen Flansch (210), das Verfahren umfassend:
- Montieren (510) wenigstens eines Befestigungselements (300) an dem Tank (400), sodass das Befestigungselement (300) innerhalb des Tanks (400) hervorsteht;
- Montieren (520) einer Federklemme (100) an dem genannten Flansch (210), wobei die Federklammern (100) elastische Teile (110) und elastische Abstandhalter (120) umfasst, welche derart angeordnet sind, dass sie, wenn sie montiert sind, gegen eine innere Oberfläche des genannten Tanks (400) drücken, um Spannung auf das genannte wenigstens eine Befestigungselement (300) auszuüben;
- Anordnen (530) der Schallwand (200) zur Geräuschreduzierung innerhalb des Tanks (400), sodass sich die genannten elastischen Teile (110) mit dem genannten wenigstens einen Befestigungselement (300) verbinden.

## Revendications

1. Déflecteur de réduction de bruit (200) pour un réservoir de fluide de véhicule (400), le déflecteur de réduction de bruit (200) comprenant une flasque (210) et une bride à ressort (100) montée sur ladite flasque (210), dans lequel ladite bride à ressort (100) comprend des éléments élastiques (110) configurés de manière à engager au moins un élément de fixation (300) destiné à être monter sur le réservoir (400) et faisant saillie, une fois monté, à l'intérieur du réservoir (400), et **caractérisé en ce que** ladite bride à ressort (100) comprend des écarteurs élastiques (120) agencés de manière à exercer une poussée, une fois montés, contre une surface intérieure dudit réservoir (400) dans le but d'appliquer une tension audit au moins un élément de fixation (300).

2. Déflecteur de réduction de bruit (200) selon la revendication 1, dans lequel ladite bride à ressort (100) est substantiellement constituée de métal.

3. Déflecteur de réduction de bruit (200) selon l'une quelconque des revendications précédentes, dans lequel ladite bride à ressort (100) comprend des crochets ou des pattes (140, 150) agencé(e)s de manière à contrecarrer l'enlèvement de ladite bride à ressort (100) de ladite flasque (210).

4. Réservoir de fluide de véhicule (400) comportant un élément de fixation (300) faisant saillie dans celui-ci, le réservoir de fluide de véhicule (400) comprenant un déflecteur de réduction de bruit (200) selon l'une quelconque des revendications précédentes, attaché à l'intérieur de celui-ci par un engagement dudit au moins un élément de fixation (300) avec ladite bride à ressort (100).

5. Réservoir de fluide de véhicule (400) selon la revendication 4, dans lequel ledit élément de fixation (300) est un élément allongé qui est soudé à une paroi dudit réservoir (400).

6. Réservoir de fluide de véhicule (400) selon la revendication 4 ou la revendication 5, dans lequel ledit élément de fixation (300) est pourvu de nervures, d'onglets ou de dents (310) qui ont pour but de faciliter l'engagement avec lesdits éléments élastiques (110).

7. Véhicule à moteur comprenant le réservoir de fluide de véhicule (400) selon l'une quelconque des revendications 4 à 6 comme réservoir de carburant.

8. Bride à ressort (100) à utiliser dans le déflecteur de réduction de bruit (200) selon l'une quelconque des revendications 1 à 3, la bride à ressort (100) comprenant des éléments élastiques (110) configurés de manière à engager au moins un élément de fixation (300) à monter sur le réservoir (400) et faisant saillie, une fois montés, à l'intérieur du réservoir (400).

9. Bride à ressort (100) selon la revendication 8, substantiellement constituée de métal.

10. Bride à ressort (100) selon la revendication 8 ou la revendication 9, comprenant en outre des écarteurs élastiques (120) agencés de manière à exercer une poussée, une fois montés, contre une surface intérieure dudit réservoir (400) dans le but d'appliquer une tension audit au moins un élément de fixation (300).

11. Bride à ressort (100) selon l'une quelconque des revendications 8 à 10, comprenant en outre des crochets ou des pattes (140, 150) agencé(e)s de manière à contrecarrer l'enlèvement de ladite bride à ressort (100) de ladite flasque (210).

12. Procédé pour installer un déflecteur de réduction de bruit (200) dans un réservoir de fluide de véhicule (400), le déflecteur de réduction de bruit (200) comprenant une flasque (210), le procédé comprenant les étapes suivantes:
- monter (510) au moins un élément de fixation (300) sur le réservoir (400) de telle sorte qu'il fasse saillie à l'intérieur du réservoir (400) ;
- monter (520) une bride à ressort (100) comprenant des éléments élastiques (110) et des écarteurs élastiques (120) agencés de manière à exercer une poussée, une fois montés, contre une surface intérieure dudit réservoir (400) dans le but d'appliquer une tension audit au moins un élément de fixation (300), sur ladite flasque (210) ; et
- agencer (530) le déflecteur de réduction de bruit (200) à l'intérieur du réservoir (400) de telle sorte que lesdits éléments élastiques (110) engagent ledit au moins un élément de fixation (300).
